# EUROPÄISCHE PATENTSCHRIFT

(11) **EP 3 653 398 B1**
(45) Veröffentlichungstag und Bekanntmachung des Hinweises auf die Patenterteilung: **30.06.2021**
(21) Anmeldenummer: 19204776.9
(22) Anmeldetag: 23.10.2019
(51) Int. Cl.: B44C 5/04, B05D 3/10, B05D 5/06, B05D 7/06, B32B 5/02, B32B 7/12, B32B 21/10, B32B 21/14, B32B 27/12, B32B 27/30

(54) **VERFAHREN ZUM HERSTELLEN EINES FORMTEILS**
METHOD FOR PRODUCING A MOULDED PART
PROCÉDÉ DE FABRICATION D'UNE PIÈCE MOULÉE

(30) Priorität: 06.11.2018 DE 102018127648
(43) Veröffentlichungstag der Anmeldung: 20.05.2020
(73) Patentinhaber: Novem Car Interior Design GmbH, 95519 Vorbach (DE)
(72) Erfinder: GRUENTHANER, Michael, 95473 Creußen (DE)
(74) Vertreter: Schlögl, Markus

(56) Entgegenhaltungen:
- DE-A1- 2 511 982
- DE-B3-102004 012 111
- US-A1- 2002 031 620

## Beschreibung

Die Erfindung betrifft ein Verfahren zum Herstellen eines Formteils, insbesondere eines als Formteil ausgebildeten Dekorteils und/oder Verkleidungsteils für einen Fahrzeuginnenraum.

Im Fahrzeuginnenraum werden zahlreiche Dekor- und Verkleidungsteile eingebaut, beispielsweise Türverkleidungen, Konsolen- und Instrumentenverblendungen. Zu den Dekor- und Verkleidungsteilen zählen auch Bedientasten bzw. deren Abdeckungen.

Bei derartigen Formteilen besteht stets der Bedarf, optisch hochwertige Dekore bereitzustellen. Ferner werden auch immer mehr Anforderungen an die Haptik solcher Formteile gestellt, insbesondere sollen sie für einen Benutzer ein interessantes und ansprechendes Gefühl bei Berührung gewährleisten.

Zum Stand der Technik wird verwiesen auf DE 10 2018 002 709 A1, DE 10 2015 005 591 A1, DE 10 2012 003 778 A1, DE 10 2004 062 646 A1, DE 25 37 239 A1, DE 10 2004 012 111 B3, sowie DE 25 11 982 A1.

Ein Verfahren zum Herstellen eines Formteils ist beispielsweise aus US 2002/0031620 A1 bekannt, wobei ein Trägermaterial zur Bildung eines Trägers an der Rückseite eines Holzfurniers hinter gespritzt wird, und wobei nach dem Hinterspritzen das Beizen des mit dem Trägermaterial hinterspritzten Holzfurniers an der Vorderseite des Holzfurniers erfolgt.

Der Erfindung liegt daher die Aufgabe zugrunde, ein neues Verfahren zum Herstellen eines Formteils anzugeben, insbesondere ein Verfahren, mit dem ein Formteil herstellbar ist, welches eine besonders ansprechende Haptik aufweist.

Diese Aufgabe wird gelöst durch die Merkmale des Anspruchs 1. Vorteilhafte Ausgestaltungen und Weiterbildungen sind in den jeweils abhängigen Ansprüchen angegeben.

Das erfindungsgemäße Verfahren ist zum Herstellen eines Formteils, insbesondere eines als Formteil ausgebildeten Dekorteils und/oder Verkleidungsteils für einen Fahrzeuginnenraum, vorgesehen, wobei das Formteil ein als Dekorschicht ausgebildetes Holzfurnier und einen Träger umfasst, wobei das Holzfurnier eine als Sichtseite ausgebildete Vorderseite und eine der Vorderseite gegenüberliegende Rückseite aufweist.

Das erfindungsgemäße Verfahren umfasst die Schritte:
- Bereitstellen eines zur Bildung der Dekorschicht vorgesehenen Holzfurniers,
- Aufbringen von Lack, insbesondere einem Kunststofflack, auf die Vorderseite des Holzfurniers, wobei der Lack entsprechend einem vorgesehenen Muster oder Symbol abschnittsweise an der Vorderseite des Holzfurniers aufgebracht wird,
- Hinterspritzen des Holzfurniers an der Rückseite des Holzfurniers mit einem Trägermaterial, insbesondere mit einem Kunststoff, bevorzugt ABS (Acrylnitril-Butadien-Styrol-Copolymere) Kunststoff, zur Bildung des Trägers,
- Beizen des Holzfurniers an der Vorderseite des Holzfurniers, insbesondere mit einer wasserlöslichen Beize. Das Beizen kann nach oder vor dem Hinterspritzen erfolgen.

Die Vorteile der Erfindung liegen darin, dass eine dreidimensionale Reliefstruktur an der Vorderseite der Dekorschicht geschaffen wird und dabei auf unflexible und kostenintensive Presswerkzeuge oder Prägewerkzeuge verzichtet werden kann.

Ein weiterer Vorteil der Erfindung liegt darin, dass mit dem erfindungsgemäßen Verfahren ein Formteil geschaffen wird, welches eine Haptik aufweist, bei welcher abschnittsweise eine glatte Oberfläche erfühlbar ist und abschnittsweise die Maserungsstruktur des Holzfurniers erfühlbar ist. Ferner kann mit dem erfindungsgemäßen Verfahren ein Formteil hergestellt werden, welches eine Optik mit zwei unterschiedlichen Farbtönen an der als Sichtseite ausgebildeten Vorderseite des Holzfurniers ermöglicht.

Die Begriffe Symbol oder Muster sind breit zu verstehen. Es kann sich bei dem Symbol beispielsweise um ein oder mehrere Funktionssymbole und/oder um dekorierende Elemente, beispielsweise Linien, handeln. Ferner kann es sich beispielsweise um einen oder mehrere Buchstaben oder einen Schriftzug oder ein Motiv handeln. Bei dem Muster kann es sich beispielsweise um geometrische Muster oder Formen handeln.

Gemäß einer besonders bevorzugten Ausführungsform der Erfindung ist vorgesehen, dass die Vorderseite des Holzfurniers mittels des Lacks abschnittsweise in den Bereichen der Lackaufbringung imprägniert wird, und/oder dass das Beizen des Holzfurniers zu einem partiellen Aufquellen des Holzfurniers in den Bereichen, in welchen kein Lack aufgebracht ist, führt, so dass an der Vorderseite des Holzfurniers eine mit dem Symbol oder Muster korrespondierende dreidimensionale Reliefstruktur ausgebildet wird.

Ferner kann vorgesehen sein, dass der Lack einen ersten Farbton aufweist und/oder transparent oder transluzent ist, und das Holzfurnier im gebeizten Bereich, insbesondere durch Farbtonänderung der Vorderseite des Holzfurniers durch das Beizen, einen zweiten Farbton aufweist.

Bevorzugt wird der Lack mittels eines Siebdruckverfahrens auf die Vorderseite des Holzfurniers aufgebracht, wobei der Lack insbesondere lasierend oder deckend aufgebracht wird.

Beispielsweise wird die Beize in einem Sprühverfahren auf die Vorderseite des Holzfurniers, insbesondere mittels einer Sprühpistole, aufgesprüht.

Bevorzugt wird das gebeizte Holzfurnier für eine vorgesehene Trocknungszeit getrocknet.

Gemäß einer Ausführungsvariante der Erfindung wird eine Schutz- und/oder Optikschicht, insbesondere ein Schutzlack, vorzugsweise ein Kunstharz-Sprühlack oder eine PUR-Hochglanzschicht im Kunststoff-Giesverfahren, auf die Vorderseite des Holzfurniers und in den Bereichen der Lackaufbringung auf den Lack aufgebracht, insbesondere nach der Trocknung des gebeizten Holzfurniers.

Es kann vorgesehen sein, dass das Holzfurnier kalibriert und/oder mit einem Trägervlies, vorzugsweise mittels Klebstoff, kaschiert wird, bevor es mit dem Trägermaterial zur Bildung des Trägers hinterspritzt wird.

Ferner kann vorgesehen sein, dass das Holzfurnier vorgeformt wird, bevor es mit dem Trägermaterial zur Bildung des Trägers hinterspritzt wird, und insbesondere nachdem es mit dem Trägervlies kaschiert wird.

Eine Weiterbildung der Erfindung sieht vor, dass das Holzfurnier entsprechend einer vorgesehenen Form zugeschnitten wird, bevor es mit dem Trägermaterial zur Bildung des Trägers hinterspritzt wird, und insbesondere bevor es vorgeformt wird.

Bevorzugt wird nach dem Hinterspritzen das mit dem Trägermaterial hinterspritzte Holzfurnier, insbesondere an der Vorderseite des Holzfurniers, gefräst.

Das erfindungsgemäße Verfahren wird nachstehend auch hinsichtlich weiterer Ausgestaltungen und Vorteile anhand der Beschreibung eines Ausführungsbeispiels des Verfahrens und unter Bezugnahme auf die beiliegenden, schematischen Zeichnungen näher erläutert.

Dabei zeigen FIG. 1 und FIG. 2 je in einer schematischen Querschnittsdarstellung ein Ausführungsbeispiel des mit dem erfindungsgemäßen Verfahren herzustellenden Formteils in unterschiedlichen Stadien während des Herstellungsprozesses. FIG. 3a und FIG. 3b zeigen je ein Ausführungsbeispiel eines gemäß dem erfindungsgemäßen Verfahren hergestellten Formteils.

Das erfindungsgemäße Verfahren ist zum Herstellen eines Formteils 10 vorgesehen, welches ein als Dekorschicht vorgesehenes Holzfurnier 11 und einen Träger 12 umfasst, wobei das Holzfurnier 11 eine als Sichtseite ausgebildete Vorderseite 13 und eine der Vorderseite 13 gegenüberliegende Rückseite 14 aufweist.

Zunächst wird ein zur Bildung der Dekorschicht vorgesehenes Holzfurnier 11 bereitgestellt. Das Holzfurnier 11 wird dann kalibriert und mit einem Trägervlies 18 mittels Klebstoff 19 kaschiert.

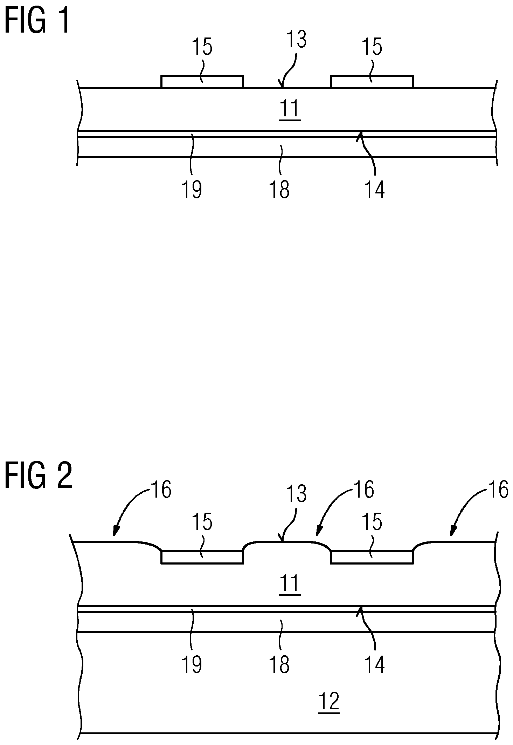

Anschließend wird Lack 15, insbesondere ein Kunststofflack, wie in FIG. 1 dargestellt, auf die Vorderseite des Holzfurniers 11 aufgebracht, wobei der Lack 15 entsprechend eines vorgesehenen Musters oder Symbols abschnittsweise an der Vorderseite 13 des Holzfurniers 11 aufgebracht wird, wobei die Vorderseite 13 des Holzfurniers 11 mittels des Lacks 15 abschnittsweise in den Bereichen der Lackaufbringung imprägniert wird. Der Lack 15 wird mittels eines Siebdruckverfahrens lasierend oder deckend aufgebracht.

In einem nächsten Schritt wird das Holzfurnier 11 entsprechend einer vorgesehenen Form zugeschnitten und anschließend vorgeformt.

Daraufhin wird das Holzfurnier 11 an der Rückseite 14 des Holzfurniers mit einem Trägermaterial, insbesondere ABS (Acrylnitril-Butadien-Styrol-Copolymere) Kunststoff, zur Bildung des Trägers 12 hinterspritzt.

Nach dem Hinterspritzen wird das mit dem Trägermaterial hinterspritzte Holzfurnier 11 an dessen Vorderseite 13 gefräst.

In einem weiteren Schritt wird das Holzfurnier 11 an dessen Vorderseite 13 mit einer wasserlöslichen Beize gebeizt, wobei die Beize in einem Sprühverfahren auf die Vorderseite 13 des Holzfurniers 11 mittels einer Sprühpistole aufgesprüht wird. Das gebeizte Holzfurnier 11 wird anschließend für eine vorgesehene Trocknungszeit getrocknet.

Das Beizen des Holzfurniers 11 führt zu einem partiellen Aufquellen des Holzfurniers 11 in den Bereichen 16, in welchen kein Lack 15 aufgebracht ist, da diese Bereiche durch den Lack imprägniert sind, so dass an der Vorderseite 13 des Holzfurniers 11 eine mit dem Symbol oder Muster korrespondierende dreidimensionale Reliefstruktur durch das Holzfurnier 11 ausgebildet wird, wie in FIG. 2 dargestellt.

Der Lack 15 weist einen ersten Farbton auf und kann transparent sein. Der gebeizte Bereich 16 weist einen durch die Farbtonänderung der Vorderseite 13 des Holzfurniers 11 beim Beizen bedingten zweiten Farbton auf, was zu einer besonders ansprechenden Optik der durch das Holzfurnier 11 ausgebildeten Dekorschicht führt.

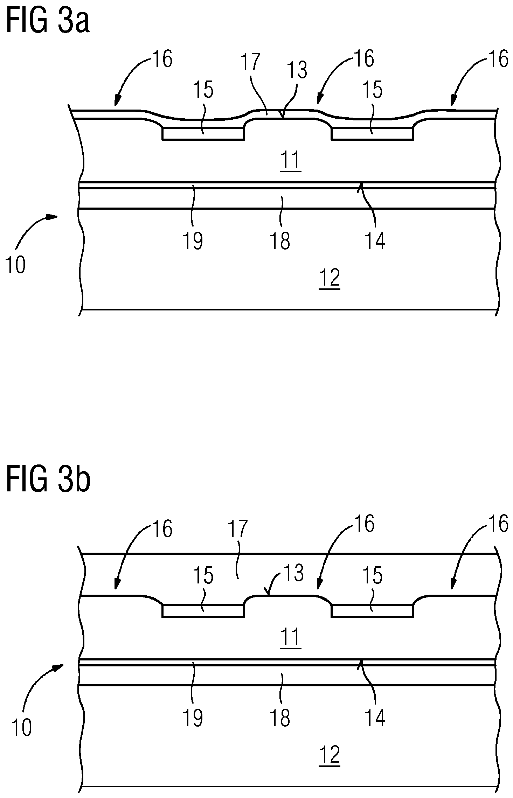

Nach der Trocknung des gebeizten Holzfurniers 11 wird ein als Schutz- und/oder Optikschicht 17 vorgesehener Kunstharz-Sprühlack auf die Vorderseite 13 des Holzfurniers 11 und in den Bereichen der Lackaufbringung auf den Lack 15 aufgesprüht. Ein mit dem vorgenannten erfindungsgemäßen Verfahren hergestelltes Formteil 10 ist in FIG. 3a dargestellt.

Alternativ kann nach der Trocknung des gebeizten Holzfurniers 11 eine als Schutz- und/oder Optikschicht 17 vorgesehene PUR-Hochglanzschicht auf die Vorderseite 13 des Holzfurniers 11 und in den Bereichen der Lackaufbringung auf den Lack 15 aufgegossen werden. Ein mit dem vorgenannten erfindungsgemäßen Verfahren hergestelltes Formteil 10 ist in FIG. 3b dargestellt.

### Bezugszeichen liste

- 10: Formteil
- 11: Dekorschicht
- 12: Träger
- 13: Vorderseite
- 14: Rückseite
- 15: Lack
- 16: Bereich
- 17: Schutz- und/oder Optikschicht
- 18: Trägervlies
- 19: Klebstoff

## Patentansprüche

1. Verfahren zum Herstellen eines Formteils (10),
wobei das Formteil (10) ein als Dekorschicht ausgebildetes Holzfurnier (11) und einen Träger (12) umfasst, wobei das Holzfurnier (11) eine als Sichtseite ausgebildete Vorderseite (13) und eine der Vorderseite (13) gegenüberliegende Rückseite (14) aufweist,
wobei das Verfahren die Schritte umfasst:
- Bereitstellen eines zur Bildung der Dekorschicht vorgesehenen Holzfurniers (11),
- Aufbringen von Lack (15) auf die Vorderseite des Holzfurniers (11), wobei der Lack (15) entsprechend einem vorgesehenen Muster oder Symbol abschnittsweise an der Vorderseite (13) des Holzfurniers (11) aufgebracht wird,
- Hinterspritzen des Holzfurniers (11) an der Rückseite (14) des Holzfurniers mit einem Trägermaterial zur Bildung des Trägers (12),
- Beizen des Holzfurniers (11) an der Vorderseite (13) des Holzfurniers (11).

2. Verfahren nach Anspruch 1,
**dadurch gekennzeichnet,**
**dass** die Vorderseite (13) des Holzfurniers (11) mittels des Lacks (15) abschnittsweise in den Bereichen der Lackaufbringung imprägniert wird, und/oder
**dass** das Beizen des Holzfurniers (11) zu einem partiellen Aufquellen des Holzfurniers (11) in den Bereichen (16), in welchen kein Lack (15) aufgebracht ist, führt, so dass an der Vorderseite (13) des Holzfurniers (11) eine mit dem Symbol oder Muster korrespondierende dreidimensionale Reliefstruktur ausgebildet wird.

3. Verfahren nach Anspruch 1 oder 2,
**dadurch gekennzeichnet, dass**
der Lack (15) einen ersten Farbton aufweist und/oder transparent oder transluzent ist, und das Holzfurnier (11) im gebeizten Bereich (16) einen zweiten Farbton aufweist.

4. Verfahren nach einem der vorhergehenden Ansprüche,
**dadurch gekennzeichnet, dass**
der Lack (15) mittels eines Siebdruckverfahrens auf die Vorderseite (13) des Holzfurniers (11) aufgebracht wird.

5. Verfahren nach einem der vorhergehenden Ansprüche,
**dadurch gekennzeichnet, dass**
die Beize in einem Sprühverfahren auf die Vorderseite (13) des Holzfurniers (11) aufgesprüht wird.

6. Verfahren nach einem der vorhergehenden Ansprüche,
**dadurch gekennzeichnet, dass**
das gebeizte Holzfurnier (11) für eine vorgesehene Trocknungszeit getrocknet wird.

7. Verfahren nach einem der vorhergehenden Ansprüche,
**dadurch gekennzeichnet, dass**
eine Schutz- und/oder Optikschicht (17) auf die Vorderseite (13) des Holzfurniers (11) und in den Bereichen der Lackaufbringung auf den Lack (15) aufgebracht wird.

8. Verfahren nach einem der vorhergehenden Ansprüche,
**dadurch gekennzeichnet, dass**
das Holzfurnier (11) kalibriert und/oder mit einem Trägervlies (18) kaschiert wird, bevor es mit dem Trägermaterial zur Bildung des Trägers (12) hinterspritzt wird.

9. Verfahren nach einem der vorhergehenden Ansprüche,
**dadurch gekennzeichnet, dass**
das Holzfurnier (11) vorgeformt wird, bevor es mit dem Trägermaterial zur Bildung des Trägers (12) hinterspritzt wird.

10. Verfahren nach einem der vorhergehenden Ansprüche,
**dadurch gekennzeichnet, dass**
das Holzfurnier (11) entsprechend einer vorgesehenen Form zugeschnitten wird, bevor es mit dem Trägermaterial zur Bildung des Trägers (12) hinterspritzt wird.

11. Verfahren nach einem der vorhergehenden Ansprüche,
**dadurch gekennzeichnet, dass**
nach dem Hinterspritzen das mit dem Trägermaterial hinterspritzte Holzfurnier (11) gefräst wird.

## Claims

1. Method of manufacturing a moulded part (10),
wherein the moulded part (10) comprises a wood veneer (11) formed as a decorative layer and a support (12), wherein the wood veneer (11) has a front side (13) formed as a visible side and a rear side (14) opposite the front side (13),
the method comprising the steps of:
- Providing a wood veneer (11) intended to form the decorative layer,
- applying varnish (15) to the front face of the wood veneer (11), the varnish (15) being applied in sections to the front face (13) of the wood veneer (11) according to a pattern or symbol provided,
- Back injection of the wood veneer (11) at the back side (14) of the wood veneer with a carrier material to form the carrier (12),
- Staining the wood veneer (11) on the front side (13) of the wood veneer (11).

2. Method according to claim 1,
**characterised**
**in that** the front side (13) of the wood veneer (11) is impregnated in sections by means of the varnish (15) in the areas where the varnish is applied, and/or
**in that** the staining of the wood veneer (11) leads to a partial swelling of the wood veneer (11) in the regions (16) in which no varnish (15) is applied, so that a three-dimensional relief structure corresponding to the symbol or pattern is formed on the front side (13) of the wood veneer (11).

3. Method according to claim 1 or 2,
**characterised in that**
the varnish (15) has a first hue and/or is transparent or translucent, and the wood veneer (11) in the stained area (16) has a second hue.

4. Method according to any one of the preceding claims,
**characterised in that**
the varnish (15) is applied to the front side (13) of the wood veneer (11) by means of a screen printing process.

5. Method according to any one of the preceding claims,
**characterised in that**
the stain is sprayed onto the front side (13) of the wood veneer (11) in a spraying process.

6. Method according to any one of the preceding claims,
**characterised in that**
the stained wood veneer (11) is dried for a designated drying time.

7. Method according to any one of the preceding claims,
**characterised in that**
a protective and/or optical layer (17) is applied to the front face (13) of the wood veneer (11) and to the lacquer (15) in the areas where the lacquer is applied.

8. Method according to any one of the preceding claims,
**characterised in that**
the wood veneer (11) is calibrated and/or laminated with a backing fleece (18) before being back-injected with the backing material to form the support (12).

9. Method according to any one of the preceding claims,
**characterised in that**
the wood veneer (11) is preformed before being back-moulded with the backing material to form the support (12).

10. Method according to any one of the preceding claims,
**characterised in that**
the wood veneer (11) is cut according to an intended shape before being back-injected with the backing material to form the support (12).

11. Method according to any one of the preceding claims,
**characterised in that**
after back-moulding, the wood veneer (11) back-moulded with the carrier material is milled.

## Revendications

1. Procédé de fabrication d'une pièce moulée (10),
dans lequel la pièce moulée (10) comprend un placage de bois (11) formé comme une couche décorative et un support (12), dans lequel le placage de bois (11) a un côté avant (13) formé comme un côté visible et un côté arrière (14) opposé au côté avant (13),
le procédé comprenant les étapes suivantes :
- Fournir un placage de bois (11) destiné à former la couche décorative,
- Application de vernis (15) sur la face avant du placage de bois (11), le vernis (15) étant appliqué par sections sur la face avant (13) du placage de bois (11) selon un motif ou un symbole fourni,
- Injection en retour du placage de bois (11) sur la face arrière (14) du placage de bois avec un matériau de support pour former le support (12),
- Coloration du placage de bois (11) sur la face avant (13) du placage de bois (11).

2. Procédé selon la revendication 1,
**caractérisé en ce que**
**en ce que** la face avant (13) du placage de bois (11) est imprégnée par sections au moyen du vernis (15) dans les zones où le vernis est appliqué, et/ou
**en ce que** la coloration du placage de bois (11) conduit à un gonflement partiel du placage de bois (11) dans les zones (16) dans lesquelles aucun vernis (15) n'est appliqué, de sorte qu'une structure en relief tridimensionnelle correspondant au symbole ou au motif est formée sur la face avant (13) du placage de bois (11).

3. Procédé selon la revendication 1 ou 2,
**caractérisé en ce que**
le vernis (15) a une première teinte et/ou est transparent ou translucide, et le placage de bois (11) dans la zone teintée (16) a une deuxième teinte.

4. Procédé selon l'une quelconque des revendications précédentes,
**caractérisé en ce que**
le vernis (15) est appliqué sur la face avant (13) du placage de bois (11) au moyen d'un procédé de sérigraphie.

5. Procédé selon l'une quelconque des revendications précédentes,
**caractérisé en ce que**
la teinture est pulvérisée sur la face avant (13) du placage de bois (11) dans un processus de pulvérisation.

6. Procédé selon l'une quelconque des revendications précédentes,
**caractérisé en ce que**
le placage de bois teinté (11) est séché pendant un temps de séchage déterminé.

7. Procédé selon l'une quelconque des revendications précédentes,
**caractérisé en ce que**
une couche protectrice et/ou optique (17) est appliquée sur la face avant (13) du placage de bois (11) et sur le vernis (15) dans les zones où le vernis est appliquée.

8. Procédé selon l'une quelconque des revendications précédentes,
**caractérisé en ce que**
le placage de bois (11) est calibré et/ou laminé avec un non-tissé de support (18) avant d'être réinjecté avec le matériau de support pour former le support (12).

9. Procédé selon l'une quelconque des revendications précédentes,
**caractérisé en ce que**
le placage de bois (11) est préformé avant d'être contre-moulé avec le matériau de support pour former le support (12).

10. Procédé selon l'une quelconque des revendications précédentes,
**caractérisé en ce que**
le placage de bois (11) est coupé à une forme prédéterminée avant d'être remoulé avec le matériau de support pour former le support (12).

11. Procédé selon l'une quelconque des revendications précédentes,
**caractérisé en ce que**
le placage de bois (11) contre-moulé avec le matériau de support est fraisé après le contre-moulage.
